# EUROPÄISCHE PATENTSCHRIFT

(11) **EP 2 694 874 B1**
(45) Veröffentlichungstag und Bekanntmachung des Hinweises auf die Patenterteilung: **30.03.2016**
(21) Anmeldenummer: 12722665.2
(22) Anmeldetag: 03.04.2012
(51) Int. Cl.: F21V 23/06, F21V 19/00, F21Y 115/10

(54) **VORRICHTUNG ZUM BEFESTIGEN UND KONTAKTIEREN EINES LEUCHTMITTELS UND/ODER EINES LEUCHTMODULS, SOWIE LEUCHTE**
DEVICE FOR FASTENING AND CONTACTING A LIGHTING MEANS AND/OR A LIGHTING MODULE, AND LAMP
DISPOSITIF DE FIXATION ET DE MISE EN CONTACT D'UNE LAMPE ET/OU D'UN MODULE LUMINEUX, AINSI QUE LUMINAIRE

(30) Priorität: 08.04.2011 AT 2052011
(43) Veröffentlichungstag der Anmeldung: 12.02.2014
(73) Patentinhaber: Tridonic GmbH & Co. KG, 6851 Dornbirn (AT)
(72) Erfinder: MOSER, Peter, A-6210 Wiesing (AT); RIEDLER,Thomas, A-6121 Baumkirchen (AT)
(74) Vertreter: Barth, Alexander
(86) Internationale Anmeldenummer: PCT/AT2012/000088
(87) Internationale Veröffentlichungsnummer: WO 2012/135878

(56) Entgegenhaltungen:
- WO-A1-2010/131961
- WO-A1-2011/015166
- DE-U1-202006 018 190
- DE-U1-202009 012 000

## Beschreibung

Die Erfindung betrifft eine Vorrichtung zum Befestigen und Kontaktieren eines Leuchtmittels und/oder eines Leuchtmoduls, insbesondere eines LED-Moduls nach den Oberbegriffen des unabhängigen Anspruch 1, sowie eine Leuchte, insbesondere als Downlight, mit einer solchen Vorrichtung.

Derartige Vorrichtungen dienen dazu, zumindest ein Leuchtmittel und/oder ein Leuchtmodul, insbesondere LED-Modul, zu befestigen und mit einer Spannungsversorgung zu kontaktieren. Sie werden auch mit einer Leuchte verbunden.

Es sind Vorrichtungen für LED-Module, als LED Light Engine genannt, aus dem Stand der Technik bekannt, die ein Andrücken der LED-Modulrückseite auf eine Kühlkörperfläche ermöglichen. Dies soll mit einer definierten Kraft erfolgen, um eine notwendige Wärmeableitung gewährleisten zu können. Dadurch wird die Lebensdauer der LEDs beeinflusst. Die Vorrichtung weist beispielsweise ein Fassungsgehäuse mit zumindest einem Außenring und einem Innenring auf, der mit mehreren im Umkreis verteilten separaten Druckfedern, Schrauben und Beilagscheiben in dem Außenring gelagert ist. Durch die federnde Lagerung des Innenringes wird die Rückseite des LED-Moduls auf einem Kühlkörper gedrückt. Der Innenring soll aus hochtemperaturbeständigem Kunststoff aufgrund der Wärmeerzeugung des LED-Moduls hergestellt werden.

Es ist weiterhin aus dem Stand der Technik bekannt, u.a. auch in der DE 20 2009 012 000 U1, dass das LED-Modul mit mehreren Kontaktierungselementen versehen ist und mit Einzelkontakten im Fassungsgehäuse der Vorrichtung elektrisch kontaktiert wird. Ein weiterer Leiteranschluss ist aus den Einzelkontakten vorgesehen. Nachteil ist, dass mehrere Leiter aus dem Fassungsgehäuse vorhanden sind, ohne ordentlich geführt zu sein. Dies ist aus elektrischen Gründen wegen einer Verpolungsgefahr aber auch aus optischen Gründen nicht empfehlenswert. Siehe auch WO 2011/015166.

Aufgabe der Erfindung ist es, eine Vorrichtung zum Befestigen und Kontaktieren eines Leuchtmittels und/oder Leuchtmoduls, insbesondere eines LED-Moduls, so zu gestalten und weiterzubilden, dass die genannten Nachteile beseitigt werden, wobei eine einfache und zugängliche Montage der Anschlussleiter gewährleistet werden kann. Zusätzlich soll einen Fehlahschluss vermieden werden.

Die Lösung dieser Aufgabe erfolgt erfindungsgemäß durch die in den unabhängigen Ansprüchen angegebenen Merkmale.

Die Vorrichtung zum mechanischen Befestigen und elektrischen Kontaktieren eines Leuchtmittels und/oder eines Leuchtmoduls, insbesondere eines LED-Moduls, weist zumindest ein Fassungsgehäuse auf, und das Leuchtmittel und/oder Leuchtmodul, insbesondere LED-Modul, wird in das Fassungsgehäuse der Vorrichtung angeordnet wird, wobei das Leuchtmittel und/oder Leuchtmodul, insbesondere LED-Modul, zumindest zwei Kontaktierungselemente aufweist, die getrennt von einander am Leuchtmittel und/oder Leuchtmodul, insbesondere LED-Modul, angeordnet sind, und die jeweils mit einem Einzelkontakt des Fassungsgehäuses elektrisch kontaktiert werden können.

Ein wesentliches Merkmal der Vorrichtung ist, dass die Vorrichtung ein Adapterelement mit mindestens einer Sammelkontaktstelle aufweist, wobei eine mindestens elektrische Verbindung vorhanden ist, wobei ein Einzelkontakt des Fassungsgehäuses und ein Kontakt einer Sammelkontaktstelle mit einer elektrischen Verbindung verbunden werden können.

Es sind zumindest zwei Kontaktierungselemente am Leuchtmittel und/oder Leuchtmodul, insbesondere LED-Modul vorhanden. Üblicherweise können drei oder fünf Kontaktierungselemente (zwei Kontaktierungselemente für die Phase und den Nullleiter, ein Kontaktierungselement für den Schutzleiter und eventuell zwei Kontaktierungselemente für eine Schnittstelle für weitere Kontroll- oder Steuerelemente) vorgesehen sein, die im Umfang des Leuchtmittels und/oder Leuchtmoduls, insbesondere LED-Moduls, verteilt sind. Dadurch sind die Einzelkontakte am Fassungsgehäuse auch im Umfang des Fassungsgehäuses verteilt, sowie die dazugehörigen Kontaktklemmen für einen weiteren Leiteranschluss. Um nicht alle diese Pole einzeln am Umfang anschließen zu müssen, sondern alle Pole an einer Stelle anschließen zu können, ist das erfindungsgemäße Adapterelement vorteilhaft.

Durch die Verteilung der Kontaktierungselemente am Leuchtmittel und/oder Leuchtmodul, insbesondere LED-Modul, entstehen Nachteile, die durch die Erfindung beseitigt werden können.

Die Montage bzw. die Verkabelung der Einheit, Vorrichtung mit LED-Modul und Kühlkörper, wird besonders vereinfacht und ist dadurch auch besser zugänglich, da der Monteur bzw. Fachmann die verschiedenen Leiter nur noch an einer Stelle des Umfangs der Vorrichtung anschließen soll.

Dazu können auch Fehler oder eine Verwechslung beim elektrischen Anschließen des Leuchtmittels und/oder Leuchtmoduls, insbesondere LED-Moduls, vermieden werden.

Der Nachteil, dass viele Leiter rundum der Vorrichtung, des Kühlkörpers oder des LED-Moduls liegen, wird dadurch beseitigt, da die Leiter nur aus der Sammelkontaktstelle herausragen und zur weiteren Verkabelung besser geführt werden können.

Die Sammelkontaktstelle kann auch als Knotenpunkt bezeichnet werden.

Es wird bevorzugt, dass jeder Kontakt der Sammelkontaktstelle, der über eine elektrische Verbindung mit einem Einzelkontakt des Fassungsgehäuses verbunden ist, mit einem einzigen Einzelkontakt des Fassungsgehäuses über eine einzige elektrische Verbindung verbunden ist.

Es kann vorgesehen werden, dass manche Einzelkontakte des Fassungsgehäuses keine elektrische Verbindung zur Sammelkontaktstelle zugeordnet haben. Vor allem kann es für die Erdung vorkommen, da sie keine lange Verkabelung aus der Kontaktklemme benötigt, wenn sie direkt am Kühlkörper kontaktiert wird.

Die Sammelkonfaktstelle soll eine Gruppierung der Anschlüsse ermöglichen, wobei die jeweiligen Kontakte nebeneinander und/oder übereinander angeordnet werden können.

Die Erfindung sieht auch vor, dass ein erster Teil der Einzelkontakte des Fassungsgehäuses, sprich ein oder mehrere Einzelkontakte, über erste elektrischen Verbindungen zu einer ersten Sammelkontaktstelle des Adapterelements geführt werden und ein weiterer Teil der Einzelkontakte des Fassungsgehäuses, wiederum ein oder mehrere Einzelkontakte, über weitere elektrische Verbindungen zu einer weiteren Sammelkontaktstelle des Adapterelements geführt werden.

Aus Montage- bzw. Zugänglichkeits- oder beispielsweise Kodierungsgründen kann es vorteilhaft, dass mehrere Sammelkontaktstellen am Adapterelement vorhanden werden. Ein oder mehrere Einzelkontakte können in diesem Fall über ihre jeweiligen elektrischen Verbindungen mit einer ersten Sammelkontaktstelle verbunden bzw. kontaktiert werden, ein oder mehrere weiteren Einzelkontakte können über ihre jeweiligen elektrischen Verbindungen mit einer zweiten Sammelkontaktstelle verbunden bzw. kontaktiert werden, usw...

Beispielsweise kann eine erste Sammelkontaktstelle für die Einzelkontakte, die mit einem Phasen- und/oderNullleiter kontaktiert werden sollen, vorgesehen werden. Eine weitere bzw. zweite Sammelkontaktstelle kann beispielsweise mit den Einzelkontakten kontaktiert werden, die mit Steuer- und/oder Kontrollelemente angeschlossen werden sollen. Als Steuer- und/oder Kontrollelemente können zum Beispiel Notlicht- oder Dimming-Einheiten vorgesehen werden. Weitere Sammelkontaktstellen sind nach Bedarf auch denkbar. Auf dieser Art können die Anschlüsse gruppiert werden, was die elektrische Montage verbessert, obwohl sie am Leuchtmittel und/oder Leuchtmodul, insbesondere LED-Modul, völlig getrennt angeordnet sind.

Wesentlich ist auch, dass die jeweiligen elektrischen Verbindungen im Adapterelement angeordnet werden können. Beispielsweise können sie in Führungsbahnen des Adapterelements angeordnet werden. Durch entstehen keine übrigen Leitungen aus der Vorrichtung heraus.

Beispielsweise können die elektrischen Verbindungen als Stanzteile oder als Drahteinlagen ausgebildet werden. Sie können auch beispielweise aus Leiterbahnplatinen ausgebildet werden. Andere Möglichkeiten sind aber nicht auszuschließen, werden aber hier nicht ausführlich aufgelistet und beschrieben.

Gemäß der Erfindung kann ein weiterer Leiteranschluss mittelbar öder unmittelbar aus zumindest einer Sammelkontaktstelle des Adapterelements erfolgen.

Eine elektrische Klemme kann an zumindest einer Sammelkontaktstelle des Adapterelements angebracht werden. Es kann sich um eine an sich bekannte elektrische Klemme handeln. Dadurch wird der weitere Leiteranschluss mit einer elektrischen Klemme vereinfacht.

Weiterhin kann das Adapterelement mit dem Fassungsgehäuse verbunden werden. Vorzugsweise wird eine Steckverbindung zwischen Adapterelement und Fassungsgehäuse angewendet. Bevorzugt befindet sich das Adapterelement im montierten Zustand zwischen dem Fassungsgehäuse und dem Kühlkörper. Da das Fassungsgehäuse mit dem Kühlkörper befestigt wird, beispielsweise mit Befestigungsschrauben, wird das Adapterelement gleichzeitig mitbefestigt.

Es wird auch bevorzugt, ein Verpolungsschutz zur Montage des Adapterelements an dem Fassungsgehäuse vorzusehen. Es soll damit verhindert werden, dass elektrische Kontakte verwechselt werden können.

Die Form bzw. der Geometrie des Adapterelements kann sich an die Form bzw. Geometrie des Fassungsgehäuses annähern. Wenn das Fassungsgehäuse als Ring ausgebildet ist, kann das Adapterelement als Ring mit annähernden Außen- und Innendurchmessern ausgebildet werden. I

Es kann auch denkbar sein, dass das Adapterelement im Fassungsgehäuse integriert wird. Dadurch wird die Anzahl der Teile der Vorrichtung reduziert, was aus Kostensicht vorteilhaft ist. Die Montage der Vorrichtung wird dadurch auch vereinfacht.

Die elektrischen Verbindungen können auch einstückig mit den Einzelkontakten ausgebildet werden. Die Führungsbahnen für die elektrischen Verbindungen können im Fassungsgehäuse vorhanden sein. Die Sammelkontaktstelle, die in diesem Fall auch an dem Fassungsgehäuse vorhanden sein kann, kann mehrere Kontaktklemmen, die nebeneinander und/oder übereinander an der Sammelkontaktstelle angeordnet sein können, oder eine an sich bekannte elektrische Klemme aufweisen.

Es ist vorteilhaft, wenn aus einem Einzelkontakt des Fassungsgehäuses sowohl eine Kontaktierung der elektrischen Verbindung als auch eine zusätzliche Kontaktierung über die Kontaktklemme erfolgen kann. Die Anordnung der Kontaktlaschen für die Kontaktierung der elektrischen Verbindung verhindert nicht eine zusätzliche an sich bekannte Kontaktierung über die Kontaktklemme am Fassungsgehäuse.

Weitere Ausführungsformen der Vorrichtung mit dem Adapterelement werden hier nicht beschrieben, sie sind aber aus der Erfindung nicht auszuschließen.

Ein weiteres wesentliches Merkmal der Erfindung ist, dass die Vorrichtung zum Befestigen und Kontaktieren eines Leuchtmittels und/oder eines Leuchtmoduls, insbesondere eines LED-Moduls, mittelbar oder unmittelbar mit einer Leuchte verbunden wird. Als Leuchte kann beispielsweise eine Downlight-Leuchte vorgesehen sein.

Die Erfindung betrifft außerdem ein Leuchtmittel oder Leuchtmodul, insbesondere LED-Modul, sowie eine Leuchte mit der erfindungsgemäßen Vorrichtung.

Im Folgenden wird die Erfindung anhand Ausführungsformen näher beschrieben, die jedoch nur beispielhaft, nicht aber einschränkend aufzufassen sein sollen.

Es zeigen:
- Fig. 1:: Explosionsansicht einer ersten erfindungsgemäßen Vorrichtung mit einem LED-Modul und einem Kühlkörper.
- Fig. 2:: Seitenansicht einer erfindungsgemäßen Vorrichtung, auf einem Kühlkörper montiert, und mit einem LED-Modul.
- Fig. 3:: Ansicht von oben einer erfindungsgemäßen Vorrichtung, auf einem Kühlkörper montiert.
- Fig. 4:: Perspektivische Ansicht der ersten erfindungsgemäßen Vorrichtung mit ihrem Fassungsgehäuse und ihrem Adapterelement.
- Fig. 5:: Weitere perspektivische Ansicht der ersten erfindungsgemäßen Vorrichtung mit ihrem Fassungsgehäuse und ihrem Adapterelement.
- Fig. 6:: Explosionsansicht des ersten erfindungsgemäßen Adapterelements.
- Fig. 7a:: Perspektivische Ansicht der ersten erfindungsgemäßen Vorrichtung mit ihrem Fassungsgehäuse und ihrem Adapterelement.
- Fig. 7b:: Detailansicht einer Kontaktierung aus Fig. 7a.
- Fig. 8a:: Perspektivische Ansicht des ersten erfindungsgemäßen Adapterelements mit einem Einzelkontakt des Fassungsgehäuses.
- Fig. 8b:: Detailansicht einer Kontaktierung aus Fig. 8a.
- Fig. 9:: Explosionsansicht eines zweiten erfindungsgemäßen Adapterelements.
- Fig. 10a:: Perspektivische Ansicht des zweiten erfindungsgemäßen Adapterelements mit einem Einzelkontakt des Fassungsgehäuses.
- Fig. 10b:: Detailansicht einer Kontaktierung aus Fig. 10a.
- Fig. 11a:: Explosionsansicht einer erfindungsgemäßen Vorrichtung mit einem LED-Modul und einem Kühlkörper, und mit einer Erdung.
- Fig. 11b:: Detailansicht der Erdung aus Fig. 11a.

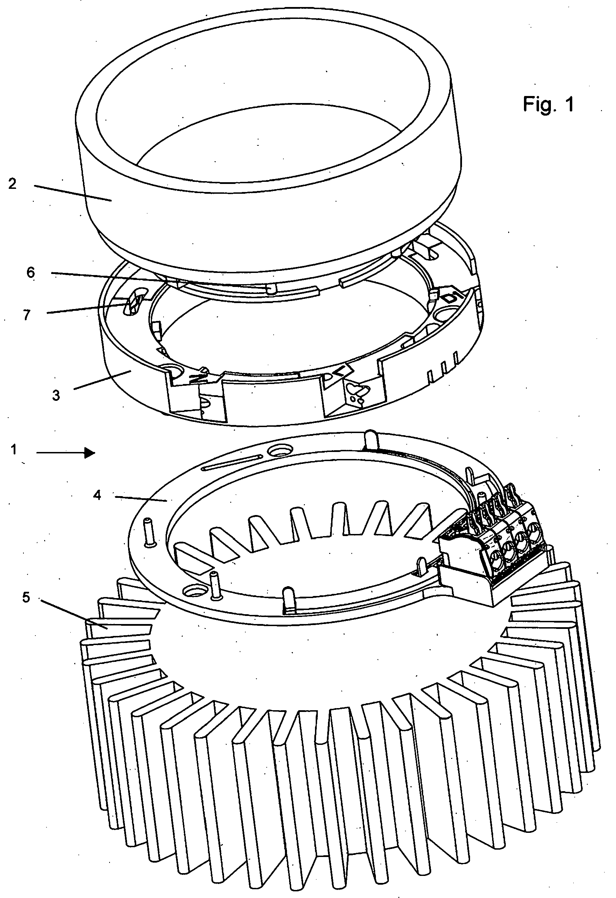

In Fig. 1 ist eine Vorrichtung 1 mit einem Leuchtmittel und/oder Leuchtmodul, insbesondere LED-Modul 2, und einem Kühlkörper 5 dargestellt. In der weiteren Beschreibung wird das Leuchtmittel und/oder Leuchtmodul, insbesondere LED-Modul 2, nur noch als LED-Modul 2 beschrieben, wobei andere Leuchtmittel und/oder Leuchtmodule nicht ausgeschlossen werden sollen.

Die Vorrichtung 1 mit dem LED-Modul 2 und dem Kühlkörper 4 sind üblicherweise Teil einer Leuchte. Es könnte sich hier um eine Downlight-Leuchte handeln. Weitere Leuchten-Type sollen trotzdem nicht aus dieser Erfindung ausgeschlossen werden.

Die Vorrichtung weist ein Fassungsgehäuse 3 auf, sowie ein erfindungsgemäßes Adapterelement 4 auf.

Das LED-Modul 2 wird im Fassungsgehäuse 3 montiert, vorzugsweise werkzeugslos, zum Beispiel nach dem Prinzip eines Bajonett-Verschlusses.

Das LED-Modul 2 weist elektrische Kontaktierungselemente 6 auf, die im Umfang des LED-Moduls 2 angeordnet sind. Aufgrund der Montage nach dem Prinzip eines Bajonett-Verschlusses werden die Kontaktierungselemente 6 in den Langlöchern 7 des Fassungsgehäuses 3 eingesteckt, In den dargestellten Beispielen sind fünf Kontaktierungselemente 6 am LED-Modul 2 vorhanden.

Die Anordnung der Kontaktierungselemente 6 am LED-Modul 2 in senkrechter oder horizontaler Richtung ist für die Erfindung nicht entscheidend. Die Langlöcher 7 sind im Fassungsgehäuse 3 dementsprechend passend angeordnet, dass eine elektrische Kontaktierung mit den jeweiligen Einzelkontakten 8 im Fassungsgehäuse 3 erfolgen kann Wichtig für die Erfindung ist wie die weitere elektrische Kontaktierung aus den jeweiligen Einzelkontakten 8 erfolgt.

Die Befestigung des LED-Moduls 2 im Fassungsgehäuse 3 nach dem Prinzip eines Bajonett-Verschlusses erfolgt vorzugsweise über andere Mittel als die Kontaktierungselemente 6, die hier nicht detailliert beschrieben werden.

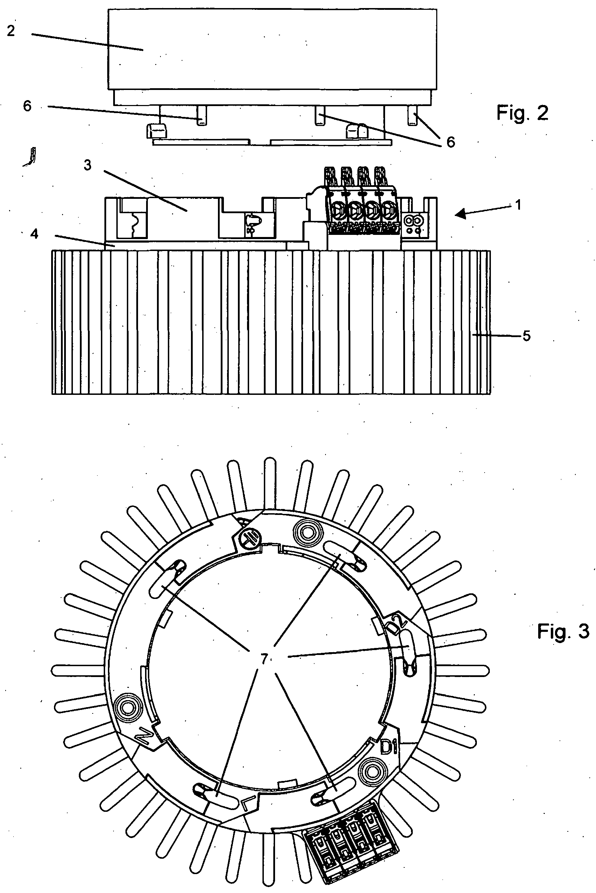

Das Adapterelement 4 befindet sich zwischen dem Fassungsgehäuse 3 und dem Kühlkörper 5. Diese Anordnung ist auch in Fig. 2 und 3 zu sehen.

Das Adapterelement 4 kann bevorzugt aus einem nicht leitenden Material sein, beispielsweise aus Kunststoff.

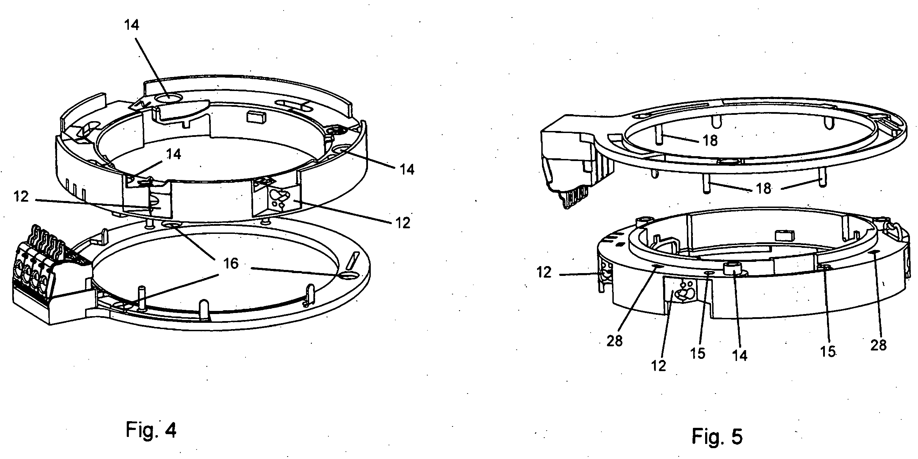

In Fig. 4 und 5 wird eine Vorrichtung 1 mit ihrem Fassungsgehäuse 3 und ihrem Adapterelement 4 dargestellt.

Das Adapterelement 4 wird bevorzugt im Fassungsgehäuse 3 eingesteckt. Das Adapterelement 4 kann Positiornierungsstifte 18 aufweisen, die bei der Montage auf dem Fassungsgehäuse 3 in den Positionierungslöchern 15 des Fassungsgehäuses 3 passen. Die Positionierungsstifte 18 werden im Umfang des Adapterelements 4 so positioniert, dass eine Art Verpolungsschutz entsteht, damit das Adapterelement 4 und das Fassungsgehäuse 3 ohne Fehler miteinander verbunden werden können

Da das Fassungsgehäuse 3 mit dem Kühlkörper 5 verbunden wird, beispielsweise mit hier nicht dargestellten Befestigungsschrauben in den Befestigungslöchern 14 des Fassungsgehäuses 3 und in hier nicht dargestellten Befestigungslöchern des Kühlkörpers 5, wird das Adapterelement 4, das sich zwischen Fassungsgehäuse 3 und Kühlkörper 5 befindet, über seine Befestigungslöcher 16 mitbefestigt.

Die an sich bekannten Kontaktklemmen 12 können trotzdem am Fassungsgehäuse 3 vorhanden sein. Dadurch sind beide Anschlussmöglichkeiten vorgesehen und der Monteur bzw. Fachmann kann auswählen, wie er die Vorrichtung 1 anschließen möchte.

Einerseits kann es aus Sicherheitsgründen vorgesehen, dass das Adapterelement 4 hier nicht dargestellte Abdeckungselemente für die Kontaktklemmen 12 des Fassungsgehäuses 3 aufweist, damit z.B. ein Pol bzw. ein Kontaktierungselement 6 des LED-Moduls 2 nicht versehentlich zweimal angeschlossen wird.

Anderseits kann es sogar erwünscht werden, dass ein zusätzlicher Anschluss über die Kontaktklemme 12 erfolgen kann, z.B. wenn mehreren LED-Module 2 miteinander verbunden werden sollen und eines davon über das Adapterelement 4 an die Spannungsversorgung angeschlossen wird. Das Adapterelement 4 ist hier vorteilhaft, da dadurch mehrere gleichwertige Anschlusspole in der Vorrichtung 1 vorgesehen werden können.

Die Kontaktlaschen 11 sind so angeordnet, dass es keine Anschlusskollision zwischen dem nicht dargestellten Anschlussleiter aus der Kontaktklemme 12 und der Lasche 21 bzw. dem Stift 23 der elektrischen Verbindung 19 im Adapterelement 4 geben kann.

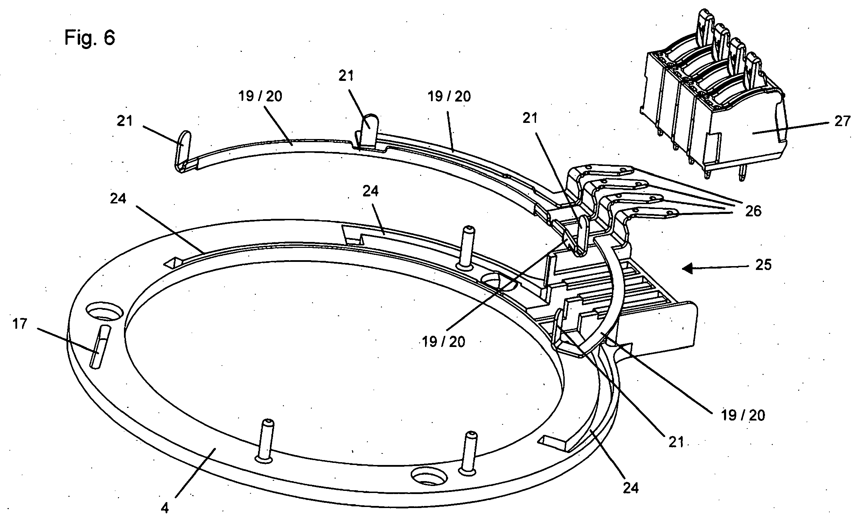

In den Fig. 6 bis 10b sind Adapterelemente 4 gezeigt.

Das Adapterelement 4 weist elektrische Verbindungen 19 auf, die die einzelnen verteilten Kontakte aus dem LED-Modul 2 zu einem Knotenpunkt oder einer Sammelkontaktstelle 25 näher zueinander führen sollen, damit den weiteren Leiteranschluss verbessert und vereinfacht werden kann.

Jede elektrische Verbindung 19 weist einen Kontakt 26 bei der Sammelkontaktstelle 25 auf oder wird mit einem Kontakt 26 verbunden. Dieser Kontakt 26 kann direkt mit einem weiteren Leiter verbunden werden oder kann mit einer elektrischen Klemme 27 verbunden werden, wobei den weiteren hier nicht dargestellten Leiteranschluss dann über die elektrische Klemme 27 erfolgt. Die Kontaktierung zwischen den jeweiligen Kontakten 26 und den nicht dargestellten weiteren Leiter bzw. der elektrischen Klemme 27 kann über eine der üblichen bzw. bekannten Methoden erfolgen.

Als elektrische Klemme 27 zum weiteren elektrischen Anschluss von hier nicht dargestellten Leitern kann eine an sich bekannte Klemme verwendet werden, wie z.B. eine Lötklemme oder eine Europa-Klemmleiste bzw. Schraubklemme. Aus solchen elektrischen Klemmen 27 ist es eindeutig und vereinfacht, wie der weitere elektrische Anschluss zu erfolgen hat. Es besteht keine Verwechslungsgefahr mehr und fehlerhafte Anschlüsse können vermieden werden, da solche elektrische Klemmen 27 Polbeschriftungen oder Farberkennungen aufweisen.

Die Sammelkontaktstelle 25 kann zusätzlich eine Kammer für jeden Kontakt 26 aufweisen.

Das Adapterelement 4 kann Führungsbahnen 24 aufweisen, wobei jede elektrische Verbindung 19 in einer Führungsbahn 24 angeordnet wird. Dadurch entsteht auch keinen elektrischen Kontakt zwischen den verschiedenen elektrischen Verbindungen 19. Es ist auch denkbar, dass die elektrischen Verbindungen 19 außer an ihren Kontaktstellen bzw. an ihren Enden einen Isolierungsschutz aufweisen.

Der Einzelkontakt 8 im Fassungsgehäuse 3 weist einerseits Kontaktlaschen 10 für den elektrischen Kontakt mit einem Kontaktierungselement 6 des LED-Moduls 2 auf, die an sich bekannt sein können, und anderseits zusätzliche Kontaktlaschen 11 für den elektrischen Kontakt mit einer elektrischen Verbindung 19.

Die jeweiligen Kontaktlaschen 10 und 11 können auch als Kontaktgabeln bezeichnet werden.

Die federnde Lasche 9 kann zur Kontaktierung mit einer einzelnen Kontaktklemme 12 am Fassungsgehäuse 3 zum weiteren Anschluss eines Leiters dienen.

Das Fassungsgehäuse 3 weist Aussparungen 28 auf, damit die elektrischen Verbindungen 19 mit dem Einzelkontakt 8 im Fassungsgehäuse 3 kontaktiert werden können.

In den dargestellten Beispielen sind vier elektrischen Verbindungen 19 dargestellt, obwohl das LED-Modul 2 fünf Kontaktierungselemente 6 aufweist. Falls nicht erforderlich, werden nicht alle Kontaktierungselemente 6 zur Sammelkontaktstelle 25 geführt. Ein oder mehrere Kontaktierungselemente 6 können aus verschiedenen Gründen über die an sich bekannten Kontaktklemmen 12 weiter angeschlossen werden. Hier ist es zum Beispiel der Fall für die Erdung 13.

Abhängig von der Einbausituation bzw. vom Anschlussschema können eine oder mehrere elektrische Verbindungen 19 im Adapterelement 4 vorgesehen sein.

Abhängig von der Einbausituation bzw. vom Anschlussschema können auch Einzelkontakte 8 des Fassungsgehäuses 3 sowohl aus dem Adapterelement 4 als auch aus der Kontaktklemme 12 weiterverdrahtet werden. Die gewählte Anordnung der Kontaktlaschen 11 und der federnden Lasche 9 im Einzelkontakt 8 ermöglicht gleichzeitig beide Anschlussmöglichkeiten.

In Fig. 6 bis Fig. 8b ist eine erste Variante von einer elektrischen Verbindung 19 dargestellt. Die elektrischen Verbindungen 19 sind als Stanzteile 20 ausgebildet.

Der Stanzteil 20 ist bevorzugt aus Kupfer, er kann alternativ auch aus Stahl verzinkt sein, abhängig welche elektrische Eigenschaften gewünscht werden. Vorteil des Stanzteils 20 ist, dass diese elektrische Verbindung sehr stabil ist. Aus dem Stanzteil 20 wird eine Lasche 21 gebogen, diese Lasche 21 wird mit dem Einzelkontakt 8 im Fassungsgehäuse 3 kontaktiert.

Die Kontakte 26 können bei dieser Variante sogar einstückig mit der elektrischen Verbindung 19 bzw. 20 ausgebildet werden.

Allerdings durch die gebogene Form der elektrischen Verbindung mit einem Stanzteil 20 entsteht viel Materialabfall, und die Herstellkosten werden dadurch erhöht.

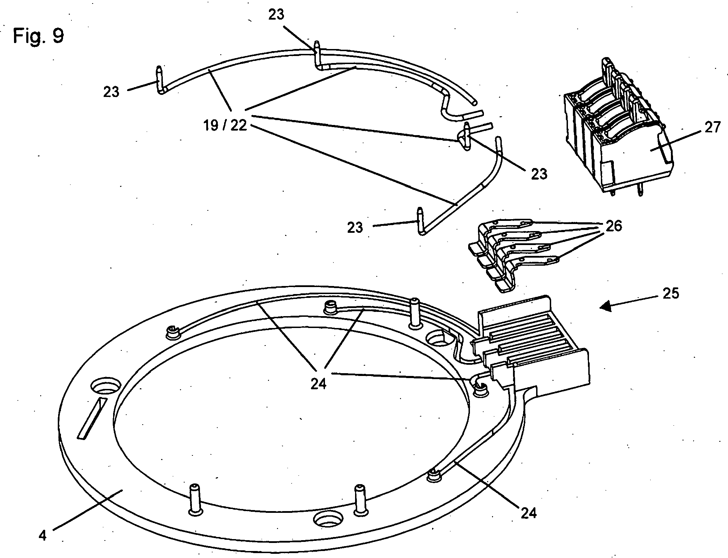

Dadurch kann es auch vorgesehen werden, dass Drahteinlagen 22 als elektrische Verbindungen 19 eingesetzt werden. Diese Variante ist in den Fig. 9 bis Fig. 10b dargestellt.

Die Drahteinlagen 22 können beispielsweise Drähte aus Kupfer sein. Diese Variante ist kostensparend gegenüber den Stanzteilen. Das Verfahren, um die Drähte zu biegen, damit sie in den Führungsbahnen 24 positioniert werden können, ist einfach und weit verbreitet.

Ein Ende jeder Drahteinlage 22 wird gebogen, damit ein Stift 23 entsteht, der mit dem Einzelkontakt 8 im Fassungsgehäuse 3 kontaktiert werden kann.

Das andere Ende jeder Drahteinlage 22 wird mit dem jeweiligen Kontakt 26 verbunden, es kann z.B. gelötet werden.

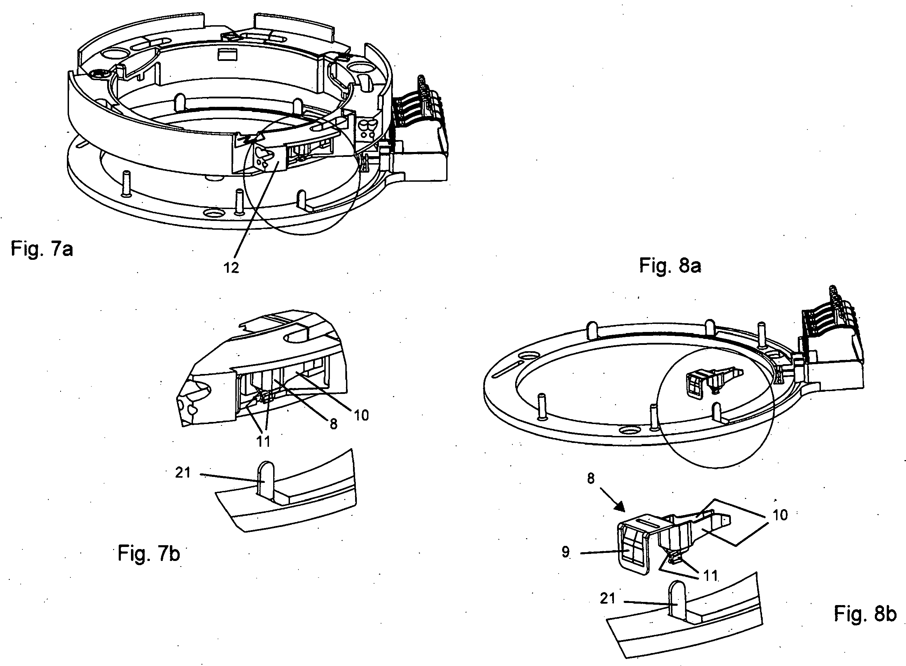

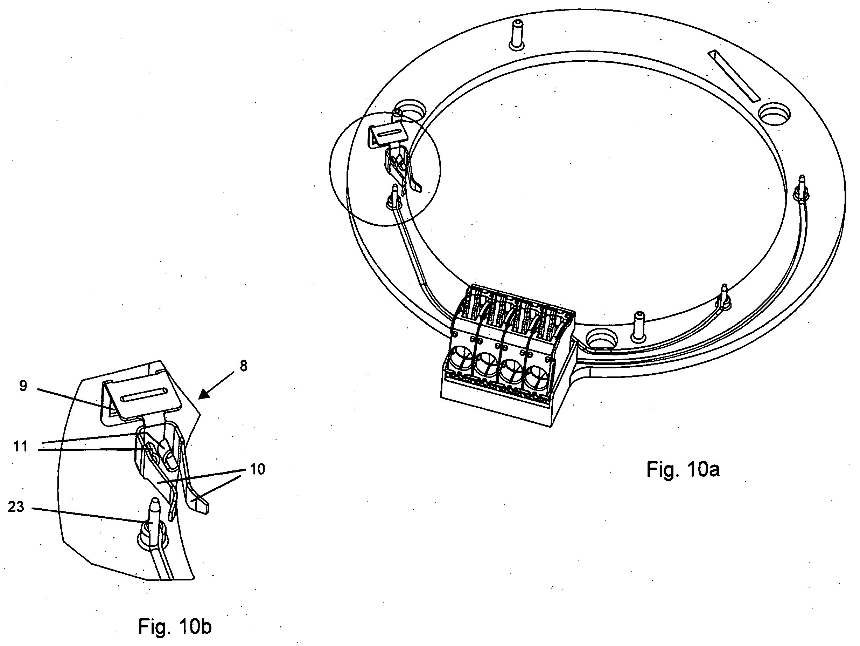

Abhängig welcher Art von elektrischer Verbindung 19 verwendet wird, können die Kontaktlaschen 11 anders gestaltet werden. In Fig. 8b sind die Kontaktlaschen 11 nach unten für die Lasche 21 des Stanzteils 20 gerichtet. In Fig. 10b sind die Kontaktlaschen 11 nach oben für den Stift 23 der Drahteinlage 22 gerichtet.

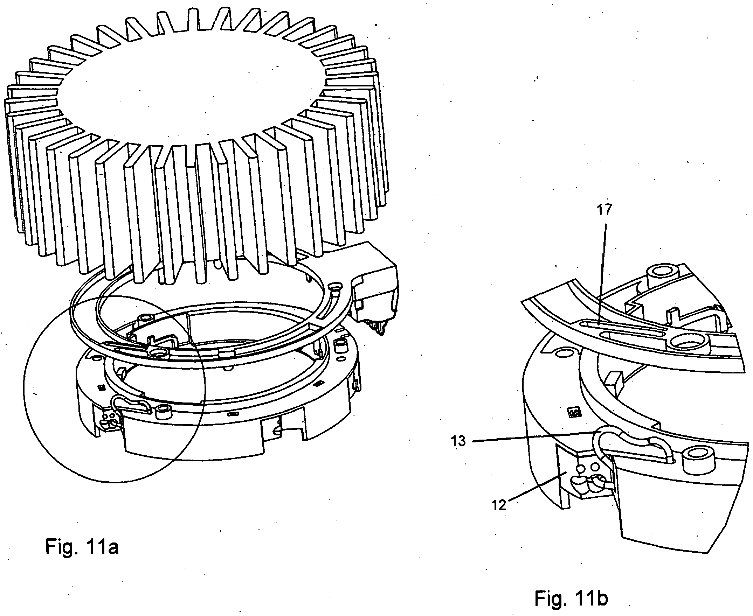

Eine Erdung 13 kann vorgesehen sein, wobei die Erdung 13 als Drahtbügel ausgebildet sein kann. Dies ist in Fig. 11a und 11b ersichtlich. Die Erdung 13 kann direkt vom LED-Modul 2 auf dem Kühlkörper kontaktiert werden, ohne über das Adapterelement 4 kontaktiert zu werden. Dadurch kann ein Schlitz 17 im Adapterelement 4 vorgesehen werden, damit die Erdung 13 direkt vom elektrischen Kontakt im Fassungsgehäuse 3 zum Kühlkörper 5 kontaktiert werden kann. Für die Erdung 13 ist auch von Vorteil, wenn eine Kontaktklemme 12 am Fassungsgehäuse 3 vorhanden ist.

Die in den Figuren dargestellten Ausführungsformen sind nur Beispiele für die Erfindung. Weitere, hier nicht dargestellte Ausführungsformen, sollen nicht ausgeschlossen sein. Zum Beispiel soll es nicht ausgeschlossen werden, dass das Adapterelement mehrere Sammelkontaktstellen aufweisen kann.

### Zeichnungsbezeichnungen:

- 1.: Vorrichtung
- 2.: LED-Modul
- 3.: Fassungsgehäuse
- 4.: Adapterelement
- 5.: Kühlkörper
- 6.: Kontaktierungselement
- 7.: Langloch
- 8.: Einzelkontakt
- 9.: federnde Lasche
- 10.: Kontaktlasche
- 11.: Kontaktlasche
- 12.: Kontaktklemme
- 13.: Erdung
- 14.: Befestigungsloch
- 15.: Positionierungsloch
- 16.: Befestigungsloch
- 17.: Schlitz
- 18.: Positionierungsstift
- 19.: elektrische Verbindung
- 20.: Stanzteil
- 21.: Lasche
- 22.: Drahteinlage
- 23.: Stift
- 24.: Führungsbahn
- 25.: Sammelkontaktstelle
- 26.: Kontakt
- 27.: elektrische Klemme
- 28.: Aussparung

## Patentansprüche

1. Vorrichtung zum Befestigen und Kontaktieren eines Leuchtmittels und/oder eines Leuchtmoduls, insbesondere eines LED-Moduls (2), wobei die Vorrichtung (1) zumindest ein Fassungsgehäuse (3) aufweist, wobei das Leuchtmittel und/oder Leuchtmodul, insbesondere LED-Modul (2), in das Fassungsgehäuse (3) der Vorrichtung (1) angeordnet wird, wobei das Leuchtmittel und/oder Leuchtmodul, insbesondere LED-Modul (2), zumindest zwei Kontaktierungselemente (6) aufweist, die getrennt von einander am Leuchtmittel und/oder Leuchtmodul, insbesondere LED-Modul (2), angeordnet sind, und die jeweils mit einem Einzetkontakt (8) des Fassungsgehäuses (3) elektrisch kontaktiert werden,
wobei die Befestigung des Leuchtmittels und/oder des Leuchtmoduls, insbesondere LED-Moduls (2), im Fassungsgehäuse (3) nach dem Pruvain eines Bajonett-Verschlusses, über andere Mittel als die Kontaktierungselemente (6) erfolgt und
**dadurch gekennzeichnet, dass** die Vorrichtung (1) ein Adapterelement (4) mit mindestens einer Sammelkontaktstelle (25) aufweist, wobei mindestens eine elektrische Verbindung (19) vorhanden ist, wobei ein Einzelkontakt (8) des Fassungsgehäuses (3) und ein Kontakt (26) einer Sammelkontaktstelle (25) mit einer elektrischen Verbindung (19) verbunden werden.

2. Vorrichtung nach Anspruch 1, **dadurch gekennzeichnet, dass** ein erster Teil der Einzelkontakte (8) des Fassungsgehäuses (3) über erste elektrische Verbindungen (19) zu einer ersten Sammelkontaktstelle (25) des Adapterelements (4) geführt werden und ein weiterer Teil der Einzelkontakte (8) des Fassungsgehäuses (3) über weitere elektrische Verbindungen (19) zu einer weiteren Sammelkontaktstelle des Adapterelements (4) geführt werden.

3. Vorrichtung nach Anspruch 1 oder 2, **dadurch gekennzeichnet, dass** die jeweiligen elektrischen Verbindungen (19) im Adapterelement (4) angeordnet sind.

4. Vorrichtung nach einem der Ansprüche 1 bis 3, **dadurch gekennzeichnet, dass** die elektrischen Verbindungen (19) als Stanzteile (20) oder als Drahteinlagen (22) oder als Leiterbahnplatinen ausgebildet sind.

5. Vorrichtung nach einem der vorhergehenden Ansprüche, **dadurch gekennzeichnet, dass** ein weiterer Leiteranschluss mittelbar oder unmittelbar aus zumindest einer Sammelkontaktstelle (25) des Adapterelements (4) erfolgt.

6. Vorrichtung nach einem der vorhergehenden Ansprüche, **Dadurch gekennzeichnet, dass** eine elektrische Klemme (27) an zumindest einer Sammelkontaktstelle (25) des Adapterelements (4) angebracht ist.

7. Vorrichtung nach einem der vorhergehenden Ansprüche, **dadurch gekennzeichnet, dass** das Adapterelement (4) mit dem Fassungsgehäuse (3) verbunden ist, wobei vorzugsweise ein Verpolungsschutz zur Montage des Adapterelements (4) an dem Fassungsgehäuse (3) vorgesehen ist.

8. Vorrichtung nach einem der Ansprüche 1 bis 6, **dadurch gekennzeichnet, dass** das Adapterelement (4) im Fassungsgehäuse (3) integriert ist.

9. Vorrichtung nach einem der vorhergehenden Ansprüche, **dadurch gekennzeichnet, dass** aus einem Einzelkontakt (8) des Fassungsgehäuses (3) sowohl eine Kontaktierung der elektrischen Verbindung (19) als auch eine zusätzliche Kontaktierung über die Köntaktklemme (12) erfolgt.

10. Leuchte mit einer Vorrichtung (1) nach einem der vorhergehenden Ansprüche.

## Claims

1. Apparatus for fastening and contacting a lighting means and/or lighting module, in particular an LED module (2), wherein the apparatus (1) has at least one socket housing (3), wherein the lighting means and/or lighting module, in particular LED module, (2) is arranged in the socket housing (3) of the apparatus (1), wherein the lighting means and/or lighting module, in particular LED module (2), has at least two contacting elements (6) arranged separate from one another on the lighting means and/or lighting module, in particular LED module (2), and electrically contacted with an individual contact (8), respectively, of the socket housing (3), wherein the fastening of the lighting means and/or lighting module, in particular LED module (2), in the socket housing (3) takes place according to the principle of a bayonet lock via other means than the contacting elements (6) and **characterized in that** the apparatus (1) has an adapter element (4) with at least one collection contact point (25), wherein at least one electrical connection (19) is present, wherein an individual contact (8) of the socket housing (3) and a contact (26) of a collection contact point (25) are connected with an electrical connection (19).

2. Apparatus according to claim 1, **characterized in that** a first part of the individual contacts (8) of the socket housing (3) is guided via first electrical connections (19) to a first collection contact point (25) of the adapter element (4) and a further part of the individual contacts (8) of the socket housing (3) is guided via further electrical connections (19) to a further collection contact point of the adapter element (4) .

3. Apparatus according to claim 1 or 2, **characterized in that** the respective electrical connections (19) are arranged in the adapter element (4).

4. Apparatus according to one of the claims 1 to 3, **characterized in that** the electrical connections (19) are formed as stamped parts (20) or as wire cores (22) or printed circuit boards.

5. Apparatus according to one of the preceding claims, **characterized in that** a further conductor connection takes place directly or indirectly from at least one collection contact point (25) of the adapter element (4).

6. Apparatus according to one of the preceding claims, **characterized in that** an electrical clamp (27) is attached to at least one collection contact point (25) of the adapter element (4).

7. Apparatus according to one of the preceding claims, **characterized in that** the adapter element (4) is connected with the socket housing (3), wherein preferably a polarity protection is provided for installing the adapter element (4) on the socket housing (3).

8. Apparatus according to one of the claims 1 to 6, **characterized in that** the adapter element (4) is integrated in the socket housing (3).

9. Apparatus according to one of the preceding claims, **characterized in that** a contacting of the electrical connection (19) takes place from an individual contact (8) of the socket housing (3) as well as an additional contacting via the contact clamp (12).

10. Luminaire with an apparatus (1) according to one of the preceding claims.

## Revendications

1. Appareil destiné à fixer et à mettre en contact un moyen d'éclairage et/ou un module d'éclairage, en particulier un module DEL (2), dans lequel l'appareil (1) possède au moins un logement de support (3), dans lequel le moyen d'éclairage et/ou le module d'éclairage, en particulier un module DEL, (2) est disposé dans le logement de support (3) de l'appareil (1), dans lequel le moyen d'éclairage et/ou le module d'éclairage, en particulier un module DEL (2), possède au moins deux éléments de contact (6) disposés séparés l' un de l' autre sur le moyen d'éclairage et/ou le module d'éclairage, en particulier un module DEL (2), et respectivement, en contact électriquement avec un contact individuel (8) du logement de support (3), dans lequel la fixation du moyen d'éclairage et/ou du module d'éclairage, en particulier un module DEL (2), dans le logement de support (3) s'effectue selon le principe d'une fermeture à baïonnette par d'autres moyens que les éléments de contact (6) et **caractérisé en ce que** l'appareil (1) possède un élément adaptateur (4) avec au moins un point de contact de collecte (25), dans lequel au moins une connexion électrique (19) est présente, dans lequel un contact individuel (8) du logement de support (3) et un contact (26) d'un point de contact de collecte (25) sont connectés à une connexion électrique (19).

2. Appareil selon la revendication 1, **caractérisé en ce qu'**une première partie des contacts individuels (8) du logement de support (3) est guidée par des premières connexions électriques (19) à un premier point de contact de collecte (25) de l'élément adaptateur (4) et une partie supplémentaire des contacts individuels (8) du logement de support (3) est guidée par des connexions électriques supplémentaires (19) à un point de contact de collecte supplémentaire de l'élément adaptateur (4).

3. Appareil selon la revendication 1 ou 2, **caractérisé en ce que** les connexions électriques respectives (19) sont disposées dans l'élément adaptateur (4).

4. Appareil selon l'une des revendications de 1 à 3, **caractérisé en ce que** les connexions électriques (19) sont formées comme des pièces embouties (20) ou comme des âmes métalliques (22) ou des cartes de circuit imprimé à piste conductrice.

5. Appareil selon l'une des revendications précédentes, **caractérisé en ce qu'**un raccordement de conducteur supplémentaire s'opère directement ou indirectement à partir d'au moins un point de contact de collecte (25) de l'élément adaptateur (4).

6. Appareil selon l'une des revendications précédentes, **caractérisé en ce qu'**un serre-fil électrique (27) est fixé à au moins un point de contact de collecte (25) de l'élément adaptateur (4).

7. Appareil selon l'une des revendications précédentes, **caractérisé en ce que** l'élément adaptateur (4) est connecté au logement de support (3), dans lequel, de préférence, une protection de polarité est prévue pour installer l'élément adaptateur (4) sur le logement de support (3).

8. Appareil selon l'une des revendications de 1 à 6, **caractérisé en ce que** l'élément adaptateur (4) est intégré dans le logement de support (3).

9. Appareil selon l'une des revendications précédentes, **caractérisé en ce qu'**un contact de la connexion électrique (19) s'opère à partir d'un contact individuel (8) du logement de support (3) et un contact additionnel par l'intermédiaire du serre-fil de contact (12).

10. Lampe dotée d'un appareil (1), selon l'une des revendications précédentes.
